# EUROPEAN PATENT APPLICATION

(11) **EP 3 098 775 A1**
(43) Date of publication of application: **30.11.2016**
(21) Application number: 15741039.0
(22) Date of filing: 07.01.2015
(51) Int. Cl.: G06Q 50/26

(54) **ELECTRONIC VOTING SYSTEM AND METHOD**

(30) Priority: 21.01.2014 KR 20140007001
(71) Applicant: Shin, Cheol Woo, Daegu 701-812 (KR)
(72) Inventor: Shin, Cheol Woo, Daegu 701-812 (KR)
(74) Representative: Ström & Gulliksson AB
(86) International application number: PCT/KR2015/000128
(87) International publication number: WO 2015/111856

(57) **Abstract**

The present invention relates to an electronic vote system and method which integrally administrates and operates various vote methods by using the electronic vote, and at the same time, performs a mirroring backup synchronization, and the present invention integrally administrates and operates, by using the electronic vote, various vote methods such as an electronic vote using a separate vote terminal, or a mobile electronic vote using voter terminal, or an on-line electronic vote through the Internet using the voter terminal, and at the same time, performs a mirroring backup synchronization with the electronic vote provision server through the mirroring backup server.

## Description

### BACKGROUND

### (a) Technical Field

The present invention relates to an electronic vote system and method, and in particular, it relates to an electronic vote system and method which integrally administrates and operates various vote methods by using the electronic vote, and at the same time, performs a mirroring backup synchronization.

### (b) Background Art

Since the majority rule has been settled down in the democratic society as an important means for decision-making, the vote is used for various purposes from a case of an election of electing the President, members of the National Assembly, general student chairman or the like to a case of deciding important national policies.

And, recently, due to the rapid progress of the infra of the information and communication, the vote is changed from the conventional off-line method to the electronic vote based on the information and communication technology.

Most of the electronic vote related technologies are limited to the security related technology based on the code/decode but a scheme of raising the vote rate of the voter has not been provided.

That is, it is usual that a vote is installed at a specific place designated by the nation, the voter himself should visit a vote booth far from him, and the vote can be accomplished only after experiencing the procedure of confirmation of the person himself at the vote booth, so that a the vote takes a lot of time and is annoying and the vote rate is low.

Whereby, various electronic vote technologies have been suggested to reduce the vote time by automation and unmanning of the procedure of confirmation of the person himself at the vote booth.

These electronic vote are referred as a method or an action of voting by using a computer or mobile phone instead of the conventional vote method in which the voter himself comes to the vote booth, goes through the procedure of confirmation of the person himself, marks at the given vote paper, and put it into the vote box, and have been gradually and widely spread in that the vote and vote count process is rapid and accurate compared to the conventional vote, the cost of election administration can be saved, and the vote participation rate can be raised.

The Korea laid-open patent publication 10-2013-011170 (laid-open on 2013. 10. 11) describes an electronic vote device, an electronic vote system and an electronic vote method, wherein the electronic vote device which is installed at public place and supports an unmanned vote is characterized in that it comprises: an input means for inputting the personal information of a voter; a certification module for accessing a certification server installed at a relevant public agency and for performing the certification together with the certification server by using the inputted personal information of the voter; a memory section which receives the information of plural candidates provided by the certification server after a certification success and stores it; a display device for displaying the candidate information stored in the memory section; and a central process device which controls to transmit to a main server installed at a central election administration committee a candidate selection information selected by the voter among the candidates displayed in the display device.

According to the disclosed technology, the voter himself does not have to visit the vote booth but can do electronic vote at a near public place, and the certification service which has been centrally administered by the central election administration committee at the time of certification of the voter for the vote is dispersed and can be performed at a relevant public agency of the voter, and the vote count service can be automatically performed.

The Korea registered patent 10-0848314 (registered on 2008. 07. 18) relates to an electronic vote device and method using a radio terminal in which a mobile communication network of a mobile communication enterprise and an electronic vote device of the national agency such as the central election administration committee are interlinked so that the mobile communication enterprise having the vote right votes by using his mobile communication terminal.

According to the disclosed technology, in an electronic vote device for performing the electronic vote through the mobile communication comprising: a voter personal certification section for certifying the voter based on the certification document transmitted from a radio terminal of the voter; a password key administration section for generating the password key for coding of vote content according to a key method and transmitting it to the radio terminal, however, for transmitting an identical secrete ley to the voters in each group by generating a secrete key group according to an already set condition in case of a secrete key method; a vote information provision section for transmitting a vote information including election candidates to the radio terminal; and a vote result storage section which, in a vote content coded by the radio terminal including the result information of the vote based on the vote information, receives the coded vote content excluding personal identification information of the voter, whereby since the voter uses a mobile phone and the mobile communication network for the vote although he is in an area where the internet access is not possible on the vote day, he can participate the vote in a method simpler and more convenient than the electronic vote using the internet within the predetermined time, so that the temporal and spatial limitation is small and the vote rate can be raised, it does not require an inherent number, access number or the like in the voter list required in the internet vote, a notice in advance is not required but the identity confirmation is carried out through the certification note so that the mobile phone user can vote conveniently, and since the vote content is coded and transmitted, the secrecy is secured at the mobile communication network, and since a personal identification information of the voter is omitted at the mobile communication server, a correlation of the voter and the vote result is not provided to the electronic vote device so that the secrecy maintenance about the vote result is secured, and in addition, only the electronic vote device which knows the key for solving the password can confirm the vote result and can reduce the totaling time in comparison to the vote count by the manual operation.

Since the conventional electronic vote system as described above is each separately operated by a variety of devices and methods such as to progress the electronic vote by using a separate vote terminal or perform the electronic vote by using a mobile communication terminal or to carry out the electronic vote through the Internet, it has difficulty in centralizing each different electronic vote devices and methods to a central server and integrally administrating and operating, and in addition, has caused problems such as an excessive increase requirement of the central server capacity, the limit of the data processing capacity, and the impossibility of the vote at the time of the server breakdown, etc..

The conventional electronic vote system as described above has problems that the vote takes long time and is inconvenient since it should go through various procedures such as the voter confirmation, the voter certification and the like especially in case of using a separate vote terminal. In addition, the conventional electronic vote system has disadvantages that since it should collect each vote result in case of performing the vote by using each different place or device, the vote count result and its totaling cannot be directly confirmed so that the vote count service is inefficient, and since the vote count service should be progressed for each event or each election, it is difficult to obtain a rapid and accurate statistic data, and a vote time of a person who participated the vote and the participation or not cannot be directly confirmed after the election progress, and in addition, the vote cannot be generated in real time and directly progressed.

### (Prior Art Documents)

### (Patent Documents)

(Patent Document 1) Korea laid-open patent publication 10-2013-011170
(Patent Document 2) Korea registered patent 10-0848314

### SUMMARY OF THE DISCLOSURE

The technical problems which the present invention tries to solve are to solve the problems and the disadvantages as described above and the technical objects which the present invention tries to obtain is to provide an electronic vote system and method which can integrally administrate and operate various vote methods by using the electronic vote and at the same time perform a mirroring backup synchronization.

To solve this problem, according to one characteristic of the present invention, an electronic vote system is provided which comprises: a plurality of voter terminals which access a designated election site, receive an online vote observance item and display it, then receive an agreement information of voters and transmit it, display a log-in window information and then receive a log-in information of the voter, code it and transmit it, then display an election information after a voter certification and an electronic signature, then receive a vote value information of the voter and code it and transmit it; a plurality of vote terminals which code a vote certification number and print it, or generate the vote certification number at random and code it and output a registered card, receive the log-in information and the vote certification number of the voter and provide them, receive the election information and display it and then receive the vote value information and code it and provide it; an administrator terminal which generates the election information together with a decode key or a plurality of vote count keys, transmits the decode key to e-mail or hand phone of the administrator or respectively transmits each vote count key to e-mail or hand phone of each vote counter, transmits the election information, receives a voter information and codes it and provides it, generates a final designation of a candidate information and a vote start information and transmits them; an electronic vote provision server which registers the election information and the voter information transmitted from the administrator terminal, provides the designated election site to the voter terminal according to the vote start information transmitted from the administrator terminal, provides the online vote observance item to the voter terminal and then receives the agreement information and provides the log-in window information to the voter terminal, performs the voter electronic signature together with the voter certification by receiving the log-in information and decoding it and then confirming the registered voter information, provides the registered election information to the voter terminal and then receives the vote value information and decodes it and registers it, receives the log-in information and the vote certification number of the voter from the vote terminal and confirms the registered voter information and performs the vote certification, then provides the registered election information to the vote terminal and then receives the vote value information and decodes it and registers it, and totals the vote result and estimates a vote information and registers it at the time of the vote completion; a data base which stores the voter information, the election information, the vote information which are registered at the electronic vote provision server; a mirroring backup server which performs a mirroring backup about an electronic vote process of the electronic vote provision server and maintains a synchronization with the electronic vote provision server, and substitutes the electronic vote provision server at the time of occurrence of an electronic vote error of the electronic vote provision server; and a network which transmits and receives data between the electronic vote provision server or the mirroring backup server and the voter terminal or the vote terminal or the administrator terminal.

In one embodiment, the voter terminal displays result look window information provided by the electronic vote provision server and then transmits the result look request information of the voter to the electronic vote provision server, and displays a vote information provided by the electronic vote provision server.

In one embodiment, the voter terminal recognizes an access code included in the registered card outputed from the vote terminal and accesses the designated election site, receives the mobile vote observance item through the designated election site and displays it and then provides the agreement information of the voter to the electronic vote provision server, displays the log-in window information provided by the electronic vote provision server and then receives or automatically receives the log-in information and the vote certification number of the voter and provides it to the electronic vote provision server, and displays the election information provided by the electronic vote provision server and then codes the vote value information of the voter and provides it to the electronic vote provision server.

In one embodiment, the electronic vote provision server provides the designated election site to the voter terminal through a recognition of the access code of the voter terminal, provides the mobile vote observance item to the voter terminal and then confirms the agreement information and provides the log-in window information to the voter terminal, receives the log-in information and the vote certification number of the voter and confirms the voter information registered in the data base and performs the vote certification, provides the election information registered in the data base to the voter terminal and then receives the vote value information and decodes it and registers it to the data base.

In one embodiment, the vote terminal interrupts the external Internet through the network and connects with the electronic vote provision server only by an inner intranet.

In one embodiment, the vote terminal outputs by including an access code together when outputting the registered card.

In one embodiment, the administrator terminal receives the decode key from the administrator after the end of the vote and confirms whether it coincides with the previously generated decode key, or receives each vote count key from each vote counter and confirms whether it coincides with each previously generated vote count key, and generates a vote count information and transmits it to the electronic vote provision server in case of coincidence.

In one embodiment, the electronic vote provision server provides to the voter terminal the result look window information according to the vote count information transmitted from the administrator terminal, and receives the result look request information from the voter terminal and provides to the voter terminal the vote information registered in the data base.

In one embodiment, the electronic vote provision server confirms a vote rate among the estimated vote information, and in case it is lower than an already set vote rate, confirms the voter who has not voted from the data base, and generates a character message and transmits it to the voter terminal corresponding to the confirmed voter.

According to another characteristic of the present invention, an electronic vote method is provided which comprises: a step in which an administrator terminal generates the election information together with a decode key or a plurality of vote count keys, transmits the decode key to e-mail or hand phone of an administrator or respectively transmits each vote count key to e-mail or hand phone of each vote counter, and transmits the election information to an electronic vote provision server, and the electronic vote provision server registers the election information transmitted from the administrator terminal; a step in which the administrator terminal receives a voter information and codes it and provides it to the electronic vote provision server, and the electronic vote provision server registers the voter information provided by the administrator terminal; a step in which the administrator terminal generates a final designation of a candidate information and a vote start information and transmits them, and the electronic vote provision server provides the designated election site to a plurality of voter terminals according to the vote start information transmitted from the administrator terminal; a step in which the voter terminal accesses a designated election site, and the electronic vote provision server provides a online vote observance item to the voter terminal, and the voter terminal receives the online vote observance item and displays it and then receives an agreement information of the voter and transmits it to the electronic vote provision server; a step in which the electronic vote provision server receives the agreement information and provides a log-in window information to the voter terminal, and the voter terminal displays the log-in window information and then receives a log-in information of the voter, codes it and transmits it to the electronic vote provision server; a step in which the electronic vote provision server performs the voter certification by receiving the log-in information and decoding it and confirming the registered voter information; a step in which the electronic vote provision server provides the registered election information to the voter terminal and the voter terminal displays an election information, then receives a vote value information of the voter and codes it and transmits it to the electronic vote provision server; a step in which the electronic vote provision server decodes the vote value information received from the voter terminal and registers it, and then provides a vote completion information to the voter terminal, and the voter terminal displays the vote completion information; a step in which the administrator terminal receives the decode key from the administrator after the end of the vote and confirms whether it coincides with the previously generated decode key, or receives each vote count key from each vote counter and confirms whether it coincides with each previously generated vote count key, and generates a vote count information and transmits it to the electronic vote provision server in case of coincidence; and a step in which the electronic vote provision server provides a result look window information to the voter terminal according to the vote count information transmitted from the administrator terminal, and provides the registered vote information to the voter terminal upon receiving the result look window information from the voter terminal and displays it.

In one embodiment, the electronic vote method further comprises: a step in which a plurality of vote terminals code a vote certification number and print it, or generate the vote certification number at random and code it and output a registered card; a step in which the vote terminal receives the log-in information and the vote certification number of the voter and provides them to the electronic vote provision server; and a step in which the vote terminal receives the election information and displays it and then receives the vote value information and code it and provide it to the electronic vote provision server.

In one embodiment, the electronic vote method further comprises: a step in which the voter terminal recognizes an access code included in the registered card outputted from the vote terminal and accesses the designated election site; a step in which the electronic vote provision server provides the designated election site to the voter terminal through a recognition of the access code of the voter terminal, and provides the mobile vote observance item to the voter terminal; a step in which the voter terminal receives the mobile vote observance item through the designated election site and then provides the agreement information of the voter to the electronic vote provision server, and the electronic vote provision server confirms the agreement information and provides a log-in window information to the voter terminal; a step in which the voter terminal displays the log-in window information provided by the electronic vote provision server and then receives or automatically receives the log-in information and the vote certification of the voter, and provides them to the electronic vote provision server; a step in which the electronic vote provision server performs the vote certification by receiving the log-in information and the vote certification number of the voter from the voter terminal and confirming the registered voter information; a step in which the electronic vote provision server provides the registered election information to the voter terminal and the voter terminal displays an election information provided by the electronic vote provision server, then receives a vote value information of the voter and codes it and provides it to the electronic vote provision server; and a step in which the electronic vote provision server decodes the vote value information received from the voter terminal and registers it, and then provides a vote completion information to the voter terminal, and the voter terminal displays the vote completion information.

In one embodiment, the electronic vote method further comprises a step in which the mirroring backup server performs a mirroring backup about the electronic vote process of the electronic vote provision server and maintains a synchronization with the electronic vote provision server, and substitutes the electronic vote provision server at the time of occurrence of the electronic vote error of the electronic vote provision server.

According to another characteristic of the present invention, an electronic vote method is provided which comprises: a step in which an administrator terminal generates the election information together with a decode key or a plurality of vote count keys, transmits the decode key to e-mail or hand phone of an administrator or respectively transmits each vote count key to e-mail or hand phone of each vote counter, and transmits the election information to an electronic vote provision server, and the electronic vote provision server registers the election information transmitted from the administrator terminal; a step in which the administrator terminal receives a voter information and codes it and provides it to the electronic vote provision server, and the electronic vote provision server registers the voter information provided by the administrator terminal; a step in which a plurality of vote terminals code a vote certification number and print it, or generate the vote certification number at random and code it and output a registered card, and then receive the log-in information and the vote certification number of the voter and provide them to the electronic vote provision server; a step in which the electronic vote provision server performs the vote certification by receiving the log-in information and the vote certification number of the voter from the vote terminal and confirming the registered voter information; a step in which the electronic vote provision server provides the registered election information to the vote terminal and the vote terminal receives the election information and displays it, then receives a vote value information of the voter and codes it and provides it to the electronic vote provision server; a step in which the electronic vote provision server decodes the vote value information received from the vote terminal and registers it, and then provides a vote completion information to the vote terminal, and the vote terminal displays the vote completion information; a step in which the administrator terminal receives the decode key from the administrator after the end of the vote and confirms whether it coincides with the previously generated decode key, or receives each vote count key from each vote counter and confirms whether it coincides with each previously generated vote count key, and generates a vote count information and transmits it to the electronic vote provision server in case of coincidence; and a step in which the electronic vote provision server provides a result look window information to the voter terminal according to the vote count information transmitted from the administrator terminal, and provides the registered vote information to the voter terminal upon receiving the result look window information from the voter terminal and displays it.

According to another characteristic of the present invention, an electronic vote method is provided which comprises: a step in which an administrator terminal generates the election information together with a decode key or a plurality of vote count keys, transmits the decode key to e-mail or hand phone of an administrator or respectively transmits each vote count key to e-mail or hand phone of each vote counter, and transmits the election information to an electronic vote provision server, and the electronic vote provision server registers the election information transmitted from the administrator terminal; a step in which the administrator terminal receives a voter information and codes it and provides it to the electronic vote provision server, and the electronic vote provision server registers the voter information provided by the administrator terminal; a step in which a plurality of vote terminals code a vote certification number and print it, or generate the vote certification number at random and code it and output a registered card; a step in which a plurality of voter terminals recognizes an access code included in the registered card outputted from the vote terminal and access the designated election site; a step in which the electronic vote provision server provides the designated election site to the voter terminal through a recognition of the access code of the voter terminal, and provides the mobile vote observance item to the voter terminal; a step in which the voter terminal receives the mobile vote observance item through the designated election site and then provides the agreement information of the voter to the electronic vote provision server, and the electronic vote provision server confirms the agreement information and provides a log-in window information to the voter terminal; a step in which the voter terminal displays the log-in window information provided by the electronic vote provision server and then receives or automatically receives the log-in information and the vote certification of the voter, and provides them to the electronic vote provision server; a step in which the electronic vote provision server performs the vote certification by receiving the log-in information and the vote certification number of the voter from the voter terminal and confirming the registered voter information; a step in which the electronic vote provision server provides the registered election information to the voter terminal and the voter terminal displays an election information provided by the electronic vote provision server, then receives a vote value information of the voter and codes it and provides it to the electronic vote provision server; and a step in which the electronic vote provision server decodes the vote value information received from the voter terminal and registers it, and then provides a vote completion information to the voter terminal, and the voter terminal displays the vote completion information; a step in which the administrator terminal receives the decode key from the administrator after the end of the vote and confirms whether it coincides with the previously generated decode key, or receives each vote count key from each vote counter and confirms whether it coincides with each previously generated vote count key, and generates a vote count information and transmits it to the electronic vote provision server in case of coincidence; and a step in which the electronic vote provision server provides a result look window information to the voter terminal according to the vote count information transmitted from the administrator terminal, and provides the registered vote information to the voter terminal upon receiving the result look window information from the voter terminal and displays it.

### (Effect of the present invention)

According to the present invention, there are effects that the present invention integrally administrates and operates, by using the electronic vote, various vote methods such as an electronic vote using a separate vote terminal, or an electronic vote using an mobile communication terminal, or an electronic vote through the Internet, and at the same time, performs a mirroring backup synchronization with the electronic vote provision server through the mirroring backup server, so that the vote time can be greatly reduced since the voter only has to click the candidate or the item which the voter himself supports, the vote count result can be directly confirmed at the same time of the end of the vote since the vote is progressed in real time, the vote count service is efficient since the totaling is directly carried out so that vote count personnel are not required, an unqualified vote and a questionable vote due to a recording error, a miswritten word, an omitted word can be prevented by an accurate reflection of the vote idea, a rapid and accurate statistic data can be easily obtained for each item, various elections can be progressed at the same time by one log-in, the vote time of each person having participated the election and the participation or not can be directly confirmed after the vote, and in addition, the vote can be generated in real time so as to directly progressed, and the vote result can be registered in the data base so that the vote result can be retrieved and perused at any time.

According to the present invention, there are also effects that the requirement of increase of a central server can be reduced due to the operation of the mirroring backup, an efficient operation is possible by distributing the data processing capacity, and a continuous vote can be accomplished by using various different methods even at the time of the server shutdown.

### BRIEF DESCRIPTION OF THE DRAWINGS

FIG. 1 is a drawing illustrating an electronic vote system according to an embodiment of the present invention;
FIG. 2 is a drawing illustrating an electronic vote method according to a first embodiment of the present invention;
FIG. 3 is a drawing showing an on-line vote observance item indication shown in FIG. 2 as an example;
FIG. 4 is a drawing showing a log-in window indication shown in FIG. 2 as an example;
FIG. 5 is a drawing showing a voter certification shown in FIG. 2 as an example;
FIG. 6 is a drawing showing an election list confirmation window indication shown in FIG. 2 as an example;
FIG. 7 is a drawing showing a vote window indication shown in FIG. 2 as an example;
FIG. 8 is a drawing showing a vote completion indication shown in FIG. 2 as an example;
FIG. 9 is a drawing illustrating an electronic vote method according to a second embodiment of the present invention;
FIG. 10 is a drawing showing a registration card output shown in FIG. 9 as an example;
FIG. 11 is a drawing showing log-in information and vote certification number provision shown in FIG. 9 as an example;
FIG. 12 is a drawing illustrating an electronic vote method according to a third embodiment of the present invention;
FIG. 13 is a drawing showing an access code included registration card shown in FIG. 12 as an example;
FIG. 14 is a drawing showing a mobile vote observance item indication shown in FIG. 12 as an example;
FIG. 15 is a drawing showing a log-in window indication shown in FIG. 12 as an example;
FIG. 16 is a drawing showing an election list confirmation window indication shown in FIG. 2 as an example;
FIG. 17 is a drawing showing a vote window indication shown in FIG. 12 as an example; and
FIG. 18 is a drawing showing a vote completion indication shown in FIG. 12 as an example.

### DETAILED DESCRIPTION

Hereinafter, embodiments of the present invention will be described in detail with reference to the accompanying drawings so that those having ordinary knowledge in the art to which the present invention belongs can easily practice it. However, since the description about the present invention is no more than embodiments for structural and functional description, the scope of the right of the present invention should not be interpreted to be limited by the embodiments described in the present text. That is, since the embodiments can be changed in various ways and can have various forms, the scope of the right of the present invention should be understood to include equivalents which can realize the technical thoughts. In addition, since the objects or the effects suggested in the present invention are not intended to mean that particular embodiment should include all of them or include only such effects, the scope of the right of the present invention should not be understood to be limited by them.

In the meantime, the meanings of the terminologies used in the present invention should be understood as follows.

When it is mentioned that a certain constitutional element is "connected" to other constitutional element, it should be understood that it can be directly connected to that other constitutional element but as well other constitutional element can exist between them. On the contrary, when it is mentioned that a certain constitutional element is "directly connected" to other constitutional element, it should be understood that other constitutional element does not exist between them. In the meantime, other expressions describing the relation between the constitutional elements, that is, "between", "directly between", adjacent to", and "directly adjacent to" should also be likewise interpreted.

The expression of single number should be interpreted to include the expression of plural number if not clearly otherwise mean in the context, and the terminologies such as "include" or "have" or the like are intended to designate that there exist a practiced characteristic, number, step, action, constitutional element or combination of them, and should be understood not to exclude in advance the possibility of existence or addition of a practiced characteristic, number, step, action, constitutional element or combination of them.

All terminologies used here have same meanings which are generally understood by those having ordinary knowledge in the art to which the present invention belongs unless defined otherwise. The terminologies which are generally used and defined in dictionaries should be interpreted to coincide with the meanings in the context of relevant technologies, and cannot be interpreted to have ideal or excessively formal meanings.

Now, an electronic vote system and method according to embodiments of the present invention will be described in detail with reference to the accompanying drawings.

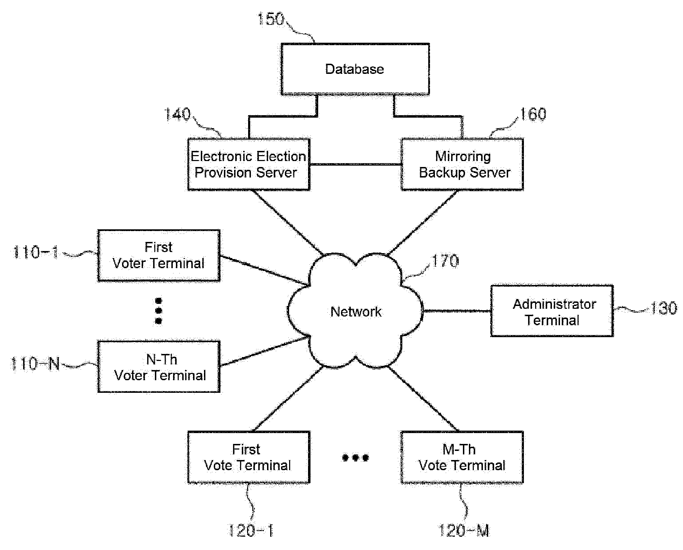

FIG. 1 is a drawing illustrating an electronic vote system according to an embodiment of the present invention.

Referring to FIG. 1, an electronic vote system 100 comprises a plurality of voter terminal 110-1 ∼ 110-N, a plurality of vote terminal 120-1 ∼ 120-M, an administrator terminal 130, an electronic vote provision server 140, a data base 150, a mirroring backup server 160, and a network 170.

The voter terminal 110-1 ∼ 110-N is a communication terminal which is capable of an internet like a PC, a notebook, a smart phone, and a mobile phone and in case where the voter himself does not come to a vote booth but accesses, at home or school or a space where the Internet is possible (or a space where the mobile communication is possible), a designated election site which is provided by the electronic vote provision server 140 through the network 170, the voter terminal receives an on-line vote observance item through the designated electron site and displays it and then provides an agreement information to the electronic vote provision server 140 according to agreement information of the voter, and displays a log-in window information received from the electronic vote provision server 140 and then receives a log-in information (that is, ID and password) of the voter and codes it and provides it to the electronic vote provision server 140, and performs an electronic signature of the voter together with voter certification and then displays the election information received from the electronic vote provision server 140 and then receives vote value information of the voter and codes it and provides it to the electronic vote provision server 140, whereby the electronic vote system is not restricted by the time and place by the on-line electronic vote method (or the mobile electronic vote method) so as to be efficient and can save the cost or time since a lot of people (voters) can vote at the same time at various places.

In one embodiment, the voter terminal 110-1 ∼ 110-N displays a result look window information received from the electronic vote provision server 140 and then transmits a result look request information to the electronic vote provision server 140 according to a result look input of the voter and displays a vote information received from the electronic vote provision server 140.

In one embodiment, the voter terminal 110-1 ∼ 110-N recognizes an access code (for example, QR code) among registration cards output from the vote terminal 120-1 ∼ 120-M and accesses a designated election site provided by the electronic vote provision server 140, and receives a mobile vote observance item through the designated electron site and displays it and then provides an agreement information to the electronic vote provision server 140 according to agreement information of the voter, and displays a log-in window information received from the electronic vote provision server 140 and then inputs (or automatically inputs) a log-in information (for example, residents number, student number, etc.) and a vote certification number of the voter and provides the relevant input log-in information and a vote certification number of the voter to the electronic vote provision server 140, and then displays the election information received from the electronic vote provision server 140 and then receives vote value information of the voter and codes it and provides it to the electronic vote provision server 140. As such, the voter uses it in case where he should himself come to the vote booth and but he has to vote by using the voter terminal 110-1 ∼ 110-N after the election stumping on the appointed day, whereby the number of the vote terminals 120-1 ∼ 120-M can be reduced and the cost and the time can be reduced.

The vote terminal 120-1 ∼ 120-M is an electronic vote device installed at a vote booth to make the voter himself to come to a vote booth designated in advance and vote, and prints the vote certification number by coding it and gives it to the voter who performed the confirmation of the person himself with an identification card taken by himself at the designated vote booth, or generates the vote certification number at random and codes the relevant generated vote certification number and outputs a registered card (for example, a bar code card), and in case where the voter who entered the vote booth taking himself with the printed vote certification number or the output registered card inputs the log-in information (for example, residents number, student number, etc.) and the vote certification number of the voter, provides the relevant input log-in information and the vote certification number of the voter to the electronic vote provision server 140, and then displays the election information received from the electronic vote provision server 140 and then receives vote value information of the voter and codes it and provides it to the electronic vote provision server 140.

In one embodiment, the vote terminal 120-1 ∼ 120-M , in case of a vote of small unit (for example, a school election, etc.), interrupts external internet through the network 170 for security purpose and connects to the electronic vote provision server 140 only through the internal intranet.

In one embodiment, the vote terminal 120-1 ∼ 120-M can output the access code (for example, QR code) together by including it at the time of outputting the registration card.

The administrator terminal 130 generates election information (for example, election or vote list) with which the voter should vote together with a decode key (or a plurality of vote count key ), and transmits the relevant generated decode key to an e-mail (or hand phone) of an administrator (or transmits each relevant generated vote count key to the e-mail (or the hand phone) of each vote counter (for example, election administration committee chairman and election administration commitee, etc.)) and provides the relevant generated election information to the electronic vote provision server 140, and provides the voter information (for example, mobile phone number or e-mail address of the voter, etc.) having a right for vote through a voter excel input to the electronic vote provision server 140 by providing it and then generates a vote start information for informing a vote start together with a final designation about a candidate information and provides it to the electronic vote provision server 140.

In one embodiment, the administrator terminal 130 receives the decode key from the administrator after the end of the vote and confirms whether it coincide with the previously generated decode key (or receives each vote count key from the plurality of vote counters and confirms whether it coincide with each previously generated vote count key), and in case of coinciding, generates a vote count information and transmits it to the electronic vote provision server 140.

The electronic vote provision server 140 registers the election information and the voter information received from the administrator terminal 130 to the data base 150, and then provides to the voter terminal 110-1 ∼ 110-N through the network 170 the election site which is designated in advance by the election administration committee according to the vote start information received from the administrator terminal 130, and provides the on-line vote observance item to the voter terminal 110-1 ∼ 110-N through the designated election site, and then confirms the agreement information received from the voter terminal 110-1 ∼ 110-N and provides the log-in window information to the voter terminal 110-1 ∼ 110-N, and receives the log-in information together with the electronic signature of the voter from the voter terminal 110-1 ∼ 110-N and decodes it and then confirms the voter information already registered in the data base 150 and performs the voter certification by using the relevant confirmed voter information, and then provides the election information already registered in the data base 150 to the voter terminal 110-1 ∼ 110-N, and receives the vote value information from the voter terminal 110-1 ∼ 110-N and decodes it and then registers it to the data base 150, and in case of receiving the log-in information and the vote certification number of the voter from the vote terminal 120-1 ∼ 120-M, confirms the voter information already registered in the data base 150 and performs the vote certification and then provides the election information already registered in the data base 150 to the vote terminal 120-1 ∼ 120-M, and receives the vote value information from the vote terminal 120-1 ∼ 120-M and decodes it and registers it to the data base 150, and then collects the vote result at the time of vote completion and estimates the vote information (for example, vote rate for each election, vote progress rate for each region, each successful candidate and the number of obtained votes for each election, and totaling result information for each candidate through a detailed totaling look, etc.) and registers it to the data base 150.

In one embodiment, the electronic vote provision server 140 provides a result look window information to the voter terminal 110-1 ∼ 110-N according to the vote count information received from the administrator terminal 130, and then receives a result look request information from the voter terminal 110-1 ∼ 110-N and provides to the voter terminal 110-1 ∼ 110-N the vote information (for example, vote rate for each election, vote progress rate for each region, each successful candidate and the number of obtained votes for each election, and totaling result information for each candidate through a detailed totaling look, etc.) registered in the data base 150.

In one embodiment, the electronic vote provision server 140 provides to the voter terminal 110-1 ∼ 110-N through the QR code recognition of the voter terminal 110-1 ∼ 110-N the election site which is designated in advance by the election administration committee and provides the mobile vote observance item to the voter terminal 110-1 ∼ 110-N through the designated election site, and then confirms the agreement information received from the voter terminal 110-1 ∼ 110-N and provides the log-in window information to the voter terminal 110-1 ∼ 110-N, and in case of receiving the log-in information and the vote certification number of the voter from the voter terminal 110-1 ∼ 110-N, confirms the voter information already registered in the data base 150 and performs the voter certification and then provides the election information already registered in the data base 150 to the voter terminal 110-1 ∼ 110-N, and receives the vote value information from the voter terminal 110-1 ∼ 110-N and decodes it and then estimates the vote information and registers it to the data base 150.

In one embodiment, the electronic vote provision server 140 can provide a straw vote in a construction similar to the above description so that a voter who is not familiar to the electronic vote can perform the electronic vote as a practice.

In one embodiment, electronic vote provision server 140 confirms the vote rate among the estimated vote information, and in case where the vote rate is lower than the already set vote rate, and confirms the voter who has not voted from the data base 150, and generates a character message for encouraging the vote to the voter terminal 110-1 ∼ 110-N corresponding to the relevant confirmed voter.

The above described voter certification is a certification method through SMS of mobile phone or e-mail, generates the vote certification number at random at the electronic vote provision server 140, and transmits the relevant generated vote certification number by SMS or mail to the mobile phone number or e-mail address of the voter registered in advance to the data base 150, and then if the voter receives the SMS or mail through the voter terminal 110-1 ∼ 110-N (for example, mobile phone, PC, etc.) and inputs the vote certification number, transmits the vote certification number received from the voter terminal 110-1 ∼ 110-N to the electronic vote provision server 140, and then at the electronic vote provision server 140, confirms whether the vote certification number received at the voter terminal 110-1 ∼ 110-N and the vote certification number previously generated coincide so as to certify whether the voter is valid. In addition, the above described vote certification is a bar code certification method in which the voter confirm his identity at the vote booth and then registers the bar code issued at the vote terminal 120-1 ∼ 120-M at the electronic vote provision server 140 so as to be certified.

In other words, the above described vote certification is a bar code certification and QR code certification method in which the voter confirm his identity at the vote booth and then accesses the vote site by using QR code among the bar code card issued at the vote terminal 120-1 ∼ 120-M, and then registers the bar code card (vote certification number) at the electronic vote provision server 140 so as to be certified.

The data base 150 registers and stores the voter information (for example, mobile phone number or e-mail address of the voter) having the right to vote inputted from the electronic vote provision server 140, the vote information (for example, election or vote list) with which the voter should vote, and the vote information (for example, vote rate, obtained number of votes for each candidate).

The mirroring backup server 160 performs a mirroring backup about the electronic vote processing of the electronic vote provision server 140 in real time and maintains synchronization with the electronic vote provision server 140, and senses a case where there is a possibility of occurring an electronic vote error such as a case where a load of the electronic vote provision server 140 is above an already set load, and continuously provides the electronic vote like the above described one instead of the electronic vote provision server 140.

In one embodiment, the mirroring backup server 160 synchronizes in real time the registration processing about the election information and the voter information, the provision processing about the previously designated vote site, the provision processing about the online vote observance item, the agreement information confirmation and log-in window information provision processing, the log-in information decode and voter information confirmation processing, the voter electronic signature confirmation processing, the voter certification processing, the election information provision processing, the vote value information decode and vote information estimation processing, the voter's log-in information and vote certification number reception processing, and the vote certification processing performed at the electronic vote provision server 140.

The network 170 includes a wired communication network or radio communication network, and connects the communication between the electronic vote provision server 140 (or the mirroring backup server 160) and the plurality of voter terminals 110-1 ∼ 110-N, or the plurality of vote terminals 120-1 ∼ 120-M, or the administrator terminal 130 so as to perform the data transmission and reception.

The electronic vote system 100 having the above described construction is embodied to have an accuracy with which the accurate totaling of the vote result is obtained for each election without an error of one person, a secrecy obtained through a triple coding processing so that who selected which candidate is not known, that is, the secrete about the relation of the vote result and the voter is maintained, a double vote prevention for enabling only one time vote of one voter by checking the person himself, a fairness for preventing anyone from knowing the election result during the vote without totaling, that is, for preventing a vote midway totaling result from giving influence to the remaining vote, a security for preventing in advance a security accident by coping with various dangers such as external invasion, Ddos, Worm, Virus, Spyware, Hacking or the like and at the same time for detecting and defensing a harmful traffic by constructing an electronic election system in one's own server by introducing SSL, a security program, a fire wall, and IPS which is a high performance invasion prevention system, a qualification for entitling a vote right only to persons satisfying a vote condition and for preventing the vote action of a person having no vote right, an integrity with which the vote result is triple coded and stored so that no one can forge the vote result and the election result can be decoded only when the decoding key is input, and an unfairness prevention for preventing an election interruptions by an unqualified voter through a voter log record, so that a safe and reliable electronic vote is accomplished.

The electronic vote system 100 having the above described construction integrally administrates and operates, by using the electronic vote, various vote methods such as an electronic vote using a separate vote terminal 120-1 ∼ 120-M, or a mobile electronic vote using voter terminal 110-1 ∼ 110-N, or an on-line electronic vote through the Internet using the voter terminal 110-1 ∼ 110-N, and at the same time, performs a mirroring backup synchronization with the electronic vote provision server 140 through the mirroring backup server 160, so that the vote time can be greatly reduced since the voter only has to click the candidate or the item which the voter himself supports, the vote count result can be directly confirmed at the same time of the end of the vote since the vote is progressed in real time, the vote count service is efficient since the totaling is directly carried out so that vote count personnel are not required, an unqualified vote and a questionable vote due to a recording error, a miswritten word, an omitted word can be prevented by an accurate reflection of the vote idea, a rapid and accurate statistic data can be easily obtained for each item, various elections can be progressed at the same time by one log-in, the vote time of each person having participated the election and the participation or not can be directly confirmed after the vote, and in addition, the vote can be generated in real time so as to directly progressed, and the vote result can be registered in the data base 150 so that the vote result can be retrieved and perused at any time.

The electronic vote system 100 having the above described construction operates the mirroring backup of the electronic vote provision server 140 by using the mirroring backup server 160, so that the requirement of the increase of the capability of central server can be reduced, an efficient operation is possible by distributing the data processing capability, and a continuous vote can be performed by using other vote method even at the time of server malfunction.

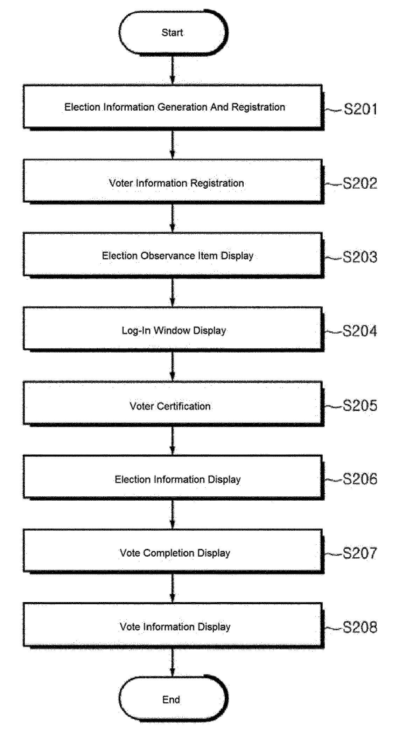

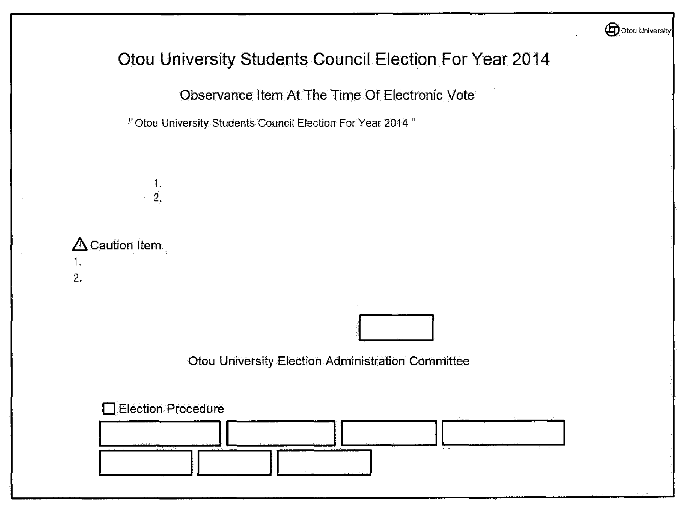

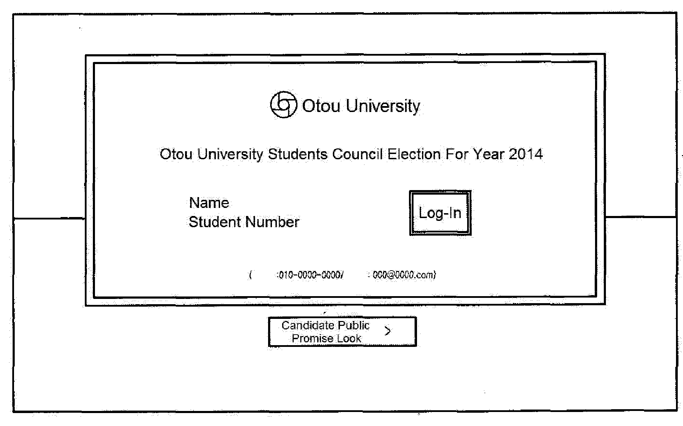

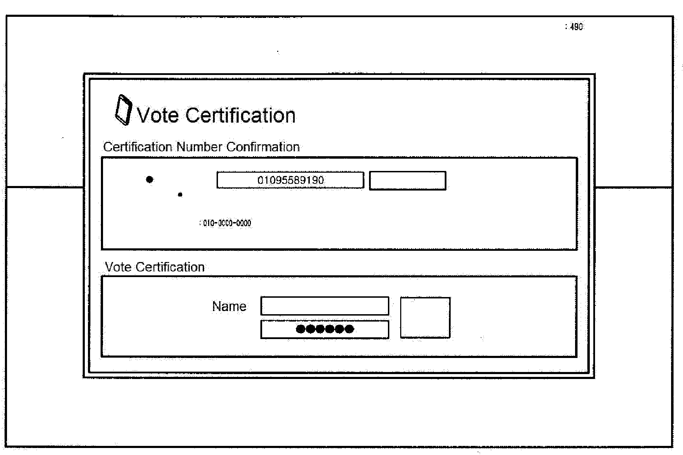

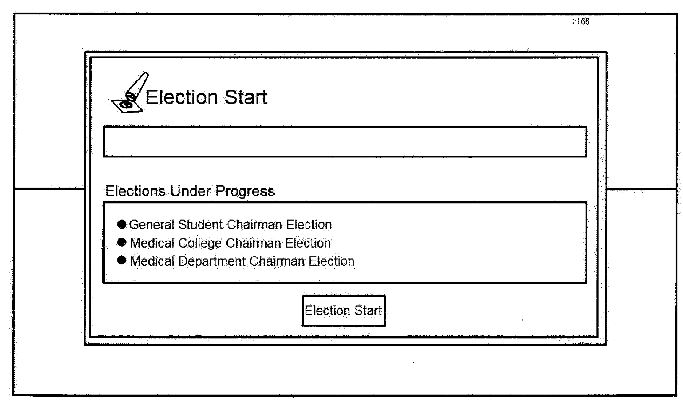

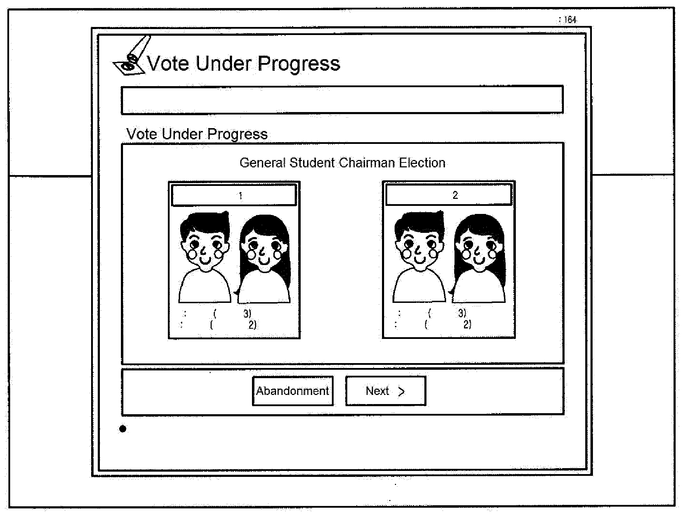

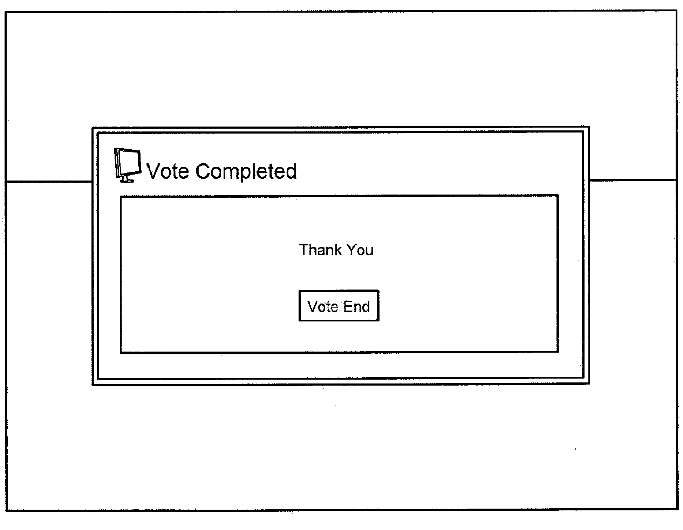

FIG. 2 is a drawing illustrating an electronic vote method according to a first embodiment of the present invention, FIG. 3 is a drawing showing an on-line vote observance item indication shown in FIG. 2 as an example, FIG. 4 is a drawing showing a log-in window indication shown in FIG. 2 as an example, FIG. 5 is a drawing showing a voter certification shown in FIG. 2 as an example, FIG. 6 is a drawing showing an election list confirmation window indication shown in FIG. 2 as an example, FIG. 7 is a drawing showing a vote window indication shown in FIG. 2 as an example, and FIG. 8 is a drawing showing a vote completion indication shown in FIG. 2 as an example.

Referring to FIGs. 2 to 8, first the administrator terminal 130 generates the election information (for example, election or vote list) with which the voter shall vote together with the decode key (or the plurality of vote count key), and then transmits the relevant generated decode key to the e-mail (or hand phone) of the administrator (or transmits each relevant generated decode key to the e-mail (or hand phone) of each vote counter (for example, election administrator committee chairman and election administrator committee, etc.) and provides the relevant generated election information to the electronic vote provision server 140. Then, the electronic vote provision server 140 registers the election information received from the administrator terminal 130 to the data base 150 (S201).

In the above described stage S201, after registration of the election information, the administrator terminal 130 codes the voter information (for example, mobile phone number or e-mail address of the voter, etc.) having the right to vote through the voter excel input and provides it to the electronic vote provision server 140. Then, the electronic vote provision server 140 registers the voter information received from the administrator terminal 130 to the data base 150 (S202).

In the above described stage S202, in case the time comes to vote after registration of the voter information, the administrator terminal 130 generates the vote start information to inform the vote start together with the final designation about the candidate information and transmits it to the electronic vote provision server 140.

The electronic vote provision server 140, according to the vote start received from the administrator terminal 130, provides the election site designated in advance by the election administration committee to the voter terminal 110-1 ∼ 110-N through the network 170 to let the voter himself not to come to the vote booth but to be able to vote at his home, or a school, or at a space capable of the Internet (or the space capable of mobile communication), wherein the voter terminal 110-1 ∼ 110-N which is a communication terminal capable of the Internet such as PC, notebook, PDA, smart phone, mobile phone, etc. accesses the designated election site provided by the electronic vote provision server 140 through the network 170.

For example, the voter terminal 110-1 ∼ 110-N can directly access the election site through the Internet web browser opened by the voter or can access the election site banner-linked through the homepage, and in addition, in case of accessing by using the smart phone or the mobile tablet, can automatically access the mobile election site corresponding thereto.

For further example, the voter terminal 110-1 ∼ 110-N receives an announce character for announcing the vote to the voter from the electronic vote provision server 140 and connect it to the election site linked when clicking the election site address included in the announce character.

The electronic vote provision server 140 confirms the voter terminal 110-1 ∼ 110-N (for example, the address, inherent identifier, etc. of the voter terminal 110-1 ∼ 110-N) accesses through the designated election site and provides the online (or mobile) vote observance item (or information on the vote procedure) to the relevant confirmed voter terminal 110-1 ∼ 110-N, then the voter terminal 110-1 ∼ 110-N receives online vote observance item (or information including the vote procedure) through the designated election site and displays it as shown in FIG. 3 (S203).

As to the online vote observance item displayed in the above described stage S203, if the voter clicks the agreement about the online vote observance item as shown in FIG. 3 through an input means (for example, point by a mouth or the like), then the voter terminal 110-1 ∼ 110-N generates an agreement information to inform the agreement of the voter about the online vote observance item according to the agreement input of the voter and provides it to the electronic vote provision server 140.

The electronic vote provision server 140 confirms the agreement information received from the voter terminal 110-1 ∼ 110-N and provides it to the log-in window information to the voter terminal 110-1 ∼ 110-N, then the voter terminal 110-1 ∼ 110-N displays the log-in window information (or click window for inputting a candidate public promise look) received from the electronic vote provision server 140 as shown in FIG. 4.

In the log-in window displayed in the above described stage S204, if the voter inputs his log-in information (that is, ID and password) through an input means (for example, touch panel, key pad, etc.), then the voter terminal 110-1 ∼ 110-N codes the relevant received log-in information and provides it to the electronic vote provision server 140.

For example, the voter terminal 110-1 ∼ 110-N can provide the name and student number input by the voter to the electronic vote provision server 140 through a log-in click and in case of clicking the candidate public promise look, receive the candidate public promise from the electronic vote provision server 140 and show it.

The electronic vote provision server 140 receives the log-in information from the voter terminal 110-1 ∼ 110-N and decodes it, and then confirms whether the relevant decoded log-in information is registered at the voter information stored in the data base 150, and performs the voter certification about the voter terminal 110-1 ∼ 110-N by using the relevant confirmed voter information (S205).

For example, in case where the voter certification in the above described stage S205 is a certification method through SMS of the mobile phone, the electronic vote provision server 140 provides a vote certification window information to the voter terminal 110-1 ∼ 110-N, and the voter terminal 110-1 ∼ 110-N displays the vote certification window information (or voter's electronic signature together with the click window for inputting a certification number receive) received from the electronic vote provision server 140 as shown in FIG. 5.

Whereby, if the voter inputs his hand phone number through an input means and clicks the certification number receive, the voter terminal 110-1 ∼ 110-N codes the relevant received hand phone number and the certification number receive request information and provides it to the electronic vote provision server 140. Then, the electronic vote provision server 140 receives the hand phone number and the certification number receive request information from the voter terminal 110-1 ∼ 110-N and randomly generates the vote certification number, and transmits the relevant generated vote certification number to the mobile phone number of the voter by using SMS. Then, if the voter inputs through the voter terminal 110-1 ∼ 110-N the vote certification number received through SMS and clicks the vote certification confirmation, then the voter terminal 110-1 ∼ 110-N transmits the received vote certification number and the vote certification confirmation request information to the electronic vote provision server 140. Whereby, the electronic vote provision server 140 confirms whether the vote certification number received from the voter terminal 110-1 ∼ 110-N and the previously generated vote certification number coincide and certifies whether the voter is valid or not.

For further example, in case where the voter certification in the above described stage S205 is a certification method through e-mail, the electronic vote provision server 140 provides a vote certification window information to the voter terminal 110-1 ∼ 110-N, and the voter terminal 110-1 ∼ 110-N displays the vote certification window information (or the click window for inputting a certification number receive) received from the electronic vote provision server 140 as shown in FIG. 5.

Whereby, if the voter inputs his e-mail address through an input means and clicks the certification number receive, the voter terminal 110-1 ∼ 110-N codes the relevant received e-mail address and the certification number receive request information and provides it to the electronic vote provision server 140. Then, the electronic vote provision server 140 receives the e-mail address and the certification number receive request information from the voter terminal 110-1 ∼ 110-N and randomly generates the vote certification number, and transmits the relevant generated vote certification number to the e-mail address of the voter by using message (mail). Then, if the voter inputs through the voter terminal 110-1 ∼ 110-N the vote certification number received through e-mail and clicks the vote certification confirmation, then the voter terminal 110-1 ∼ 110-N transmits the received vote certification number and the vote certification confirmation request information to the electronic vote provision server 140. Whereby, the electronic vote provision server 140 confirms whether the vote certification number received from the voter terminal 110-1 ∼ 110-N and the previously generated vote certification number coincide and certifies whether the voter is valid or not.

After performing the voter certification in the above described stage S205, the electronic vote provision server 140 reads the election list confirmation and the election information for voting from the data base 150 and provides it the voter terminal 110-1 ∼ 110-N, then the voter terminal 110-1 ∼ 110-N displays the election information (that is, the election list confirmation window and the vote window information) received from the electronic vote provision server 140 as shown in FIGs. 6 and 7 (S206).

As to the vote information displayed in the above described stage S206, if the voter selects the list for the vote and clicks the vote start and then selects the candidate and clicks the vote, then the voter terminal 110-1 ∼ 110-N codes the relevant inputted voter's vote value information and provides it to the electronic vote provision server 140.

For example, the voter terminal 110-1 ∼ 110-N makes the voter to select one among the lists of an assigned department election, a college election, a general student chairman election displayed through the input means and to click the vote start, then the electronic vote provision server 140 displays a candidate vote page corresponding to a selected list through the voter terminal 110-1 ∼ 110-N. At this time, the voter terminal 110-1 ∼ 110-N displays in an obscure stamp form when the voter puts a mouse at a candidate on a displayed candidate vote page and if the voter clicks while putting the mouse at the candidate, the stamp becomes clear and the selection is made. And, the voter terminal 110-1 ∼ 110-N makes the voter to click an abandonment to reflect the abandonment at the vote result and makes the voter to click next button to perform the vote for other election list.

For example, in case of one candidate, the electronic vote provision server 140 can click one among approval and opposition and the stamp becomes clear and the selection is made, and then display through the voter terminal 110-1 ∼ 110-N the candidate vote page for clicking the vote completion.

The electronic vote provision server 140 receives the vote value information from the voter terminal 110-1 ∼ 110-N and decodes it and registers it in the data base 150, and then reads from the data base 150 the vote completion information for announcing the vote completion and provides it to the voter terminal 110-1 ∼ 110-N, and then the voter terminal 110-1 ∼ 110-N displays the vote completion information received from the electronic vote provision server 140 as shown in FIG. 8 (S207).

For example, the voter terminal 110-1 ∼ 110-N, in case of completion of vote, outputs a voice "the vote is completed" and then automatically log-outs, and automatically records the time of vote and certification number or the like of the elector (voter) by the log.

After the vote completion as in the above described stage S207, the administrator terminal 130 receives the decode key from the administrator and confirms whether it coincides with the previously generated decode key (or receives each vote count key from the plurality of vote counters and confirms whether it coincides with each previously generated vote count key), and in case of coincide, generates the vote count information and transmits it to the electronic vote provision server 140.

The electronic vote provision server 140 totals the vote result according to the vote count information received from the administrator terminal 130 and estimates the vote information (for example, the vote rate for each election, vote progress rate for each region, each successful candidate and the number of obtained votes for each election, and totaling result information for each candidate through a detailed totaling look, etc.) and registers it to the data base 150, and at the same time, provides the result look window information to the voter terminal 110-1 ∼ 110-N. Then, the voter terminal 110-1 ∼ 110-N displays the result look window information received from the electronic vote provision server 140 and then transmits the result look request information according to the result look input of the voter to the electronic vote provision server 140.

The electronic vote provision server 140 receives the result look request information from the voter terminal 110-1 ∼ 110-N and provides the vote information registered in the data base 150 to the voter terminal 110-1 ∼ 110-N, and then the voter terminal 110-1 ∼ 110-N displays the vote information received from the electronic vote provision server 140 (S208).

During performing the above described stages S201 to S207, the mirroring backup server 160 maintains a synchronization with the electronic vote provision server 140 about the electronic vote action by performing the mirroring backup in real time bout the electronic vote action processed in the electronic vote provision server 140 as described above, and at this time, if the mirroring backup server senses a case where there is a possibility of an electronic vote error such as a case where the load on the electronic vote provision server 140 is at or above the already set load, the mirroring backup server stops the electronic vote action of the electronic vote provision server 140, and continuously provides the electronic vote action instead of that.

For example, the mirroring backup server 160 synchronizes in real time the registration processing about the election information and the voter information S201 and S202, the provision processing about the previously designated vote site and the provision processing about the online vote observance item S203, the agreement information confirmation and log-in window information provision processing S204, the log-in information decode and voter information confirmation processing, the voter electronic signature confirmation processing, the voter certification processing S205, the election information provision processing S206, the vote value information decode and the vote completion information provision processing S207, and the vote information estimation processing and the vote information provision processing S208.

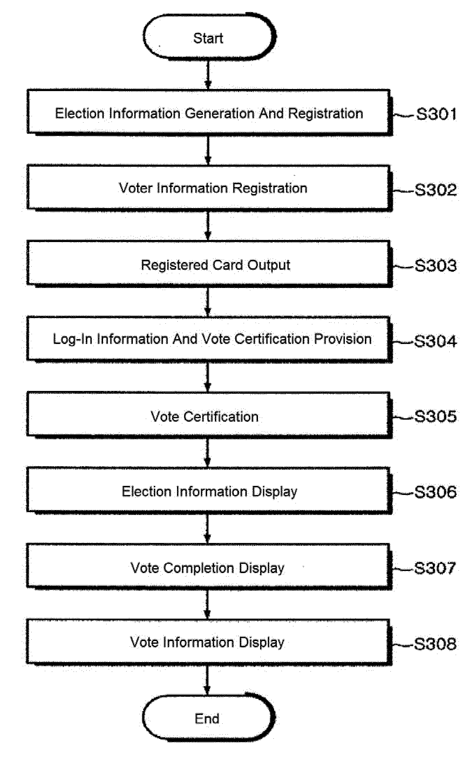

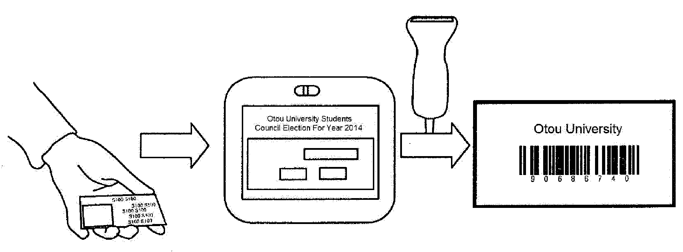

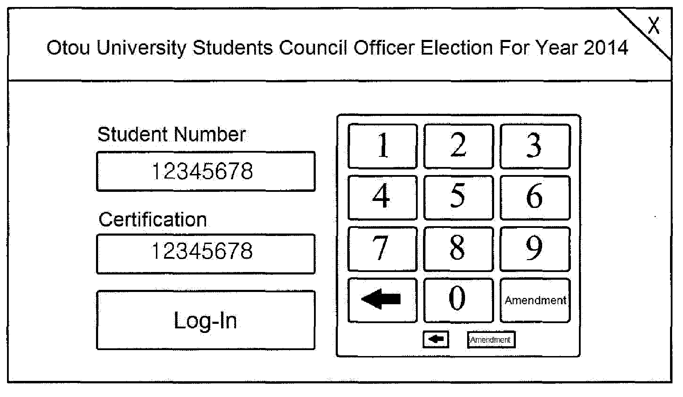

FIG. 9 is a drawing illustrating an electronic vote method according to a second embodiment of the present invention, FIG. 10 is a drawing showing a registration card output shown in FIG. 9 as an example, and FIG. 11 is a drawing showing a log-in information and vote certification number provision shown in FIG. 9 as an example.

Referring to FIGs. 9 to 11, the steps S301 and S302 are similar to the above described steps S201 and S202 in its construction and their description is omitted.

In case where the voter performed the confirmation of the person himself with the identification card taken by himself at an election district designated in advance, the vote terminal 120-1 ∼ 120-M installed at the election district to make him himself to come to the election district and vote codes the vote certification number and prints it, or generates the vote certification number at random and codes the relevant generated vote certification number and outputs the registered card (for example, bar code) to the voter who is confirmed of the person himself as shown in FIG. 10 (S303).

After outputting the registered card in the above described stage S303, in case where the voter confirmed of the person himself enters the vote booth while carrying the printed vote certification number or the outputted registered card and inputs the log-in information (for example, the residents number, student number or the like) and the vote certification number through an input means (for example, touch panel, key pad or the like), the vote terminal 120-1 ∼ 120-M provides the log-in information and the vote certification number received through the input means to the electronic vote provision server 140 as shown in FIG. 11 (S304).

The electronic vote provision server 140 receives the log-in information and the vote certification number of the voter from the vote terminal 120-1 ∼ 120-M and confirms the voter information registered in the data base 150 and performs the vote certification (S305), and provides the election information already registered in the data base 150 to the vote terminal 120-1 ∼ 120-M. Thereafter, the steps S306 to S308 are similar to the above described steps S206 to S208 in its construction and their description is omitted.

During performing the above described stages S301 to S308, the mirroring backup server 160 maintains a synchronization with the electronic vote provision server 140 about the electronic vote action by performing the mirroring backup in real time bout the electronic vote action processed in the electronic vote provision server 140 as described above, and at this time, if the mirroring backup server senses a case where there is a possibility of an electronic vote error such as a case where the load on the electronic vote provision server 140 is at or above the already set load, the mirroring backup server stops the electronic vote action of the electronic vote provision server 140, and continuously provides the electronic vote action instead of that.

For example, the mirroring backup server 160 synchronizes in real time the registration processing about the election information and the voter information S301 and S302, the log-in information and vote certification number reception and vote certification processing S305, the election information provision processing S306, the vote value information decode and the vote completion information provision processing S307, and the vote information estimation processing and the vote information provision processing S308 performed at the electronic vote provision server 140.

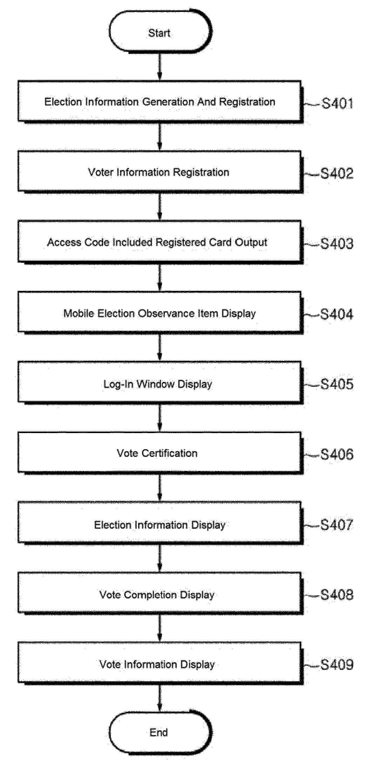

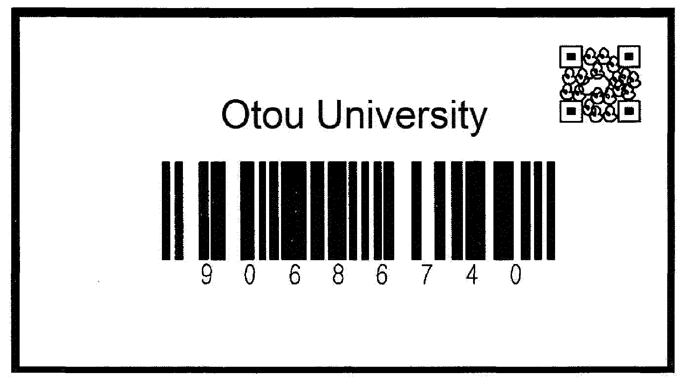

FIG. 12 is a drawing illustrating an electronic vote method according to a third embodiment of the present invention, FIG. 13 is a drawing showing an access code included registration card shown in FIG. 12 as an example, FIG.

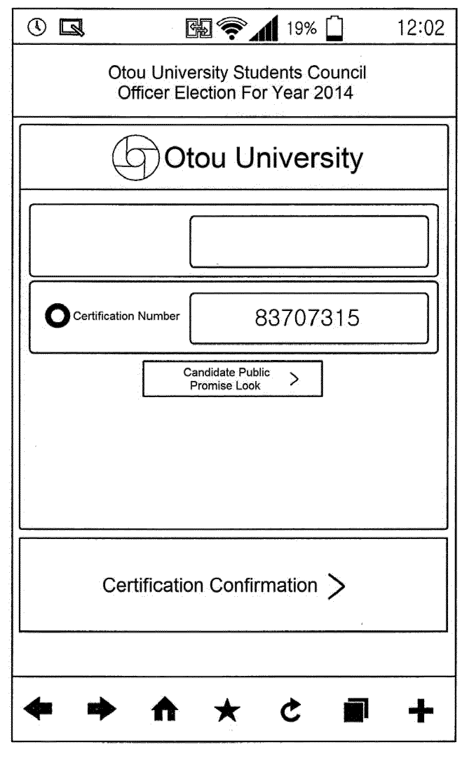

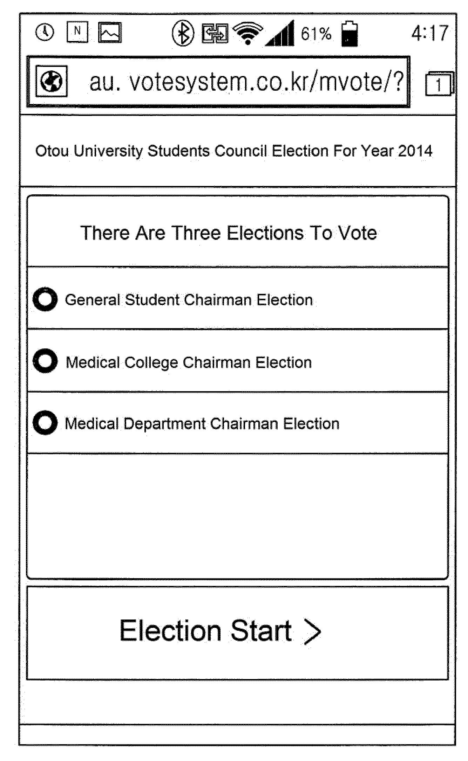

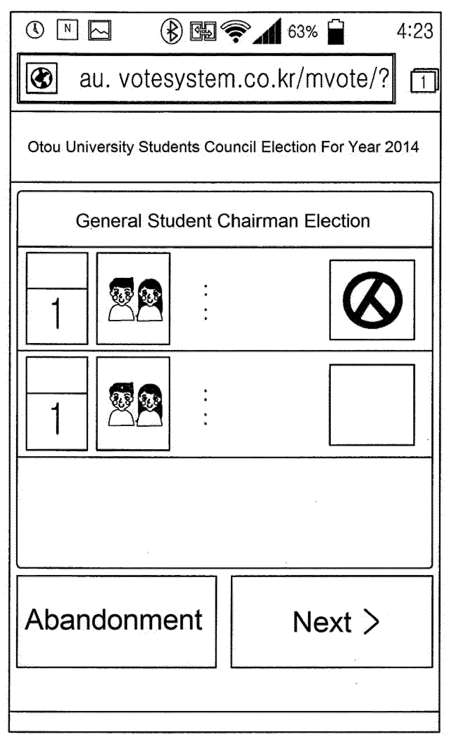

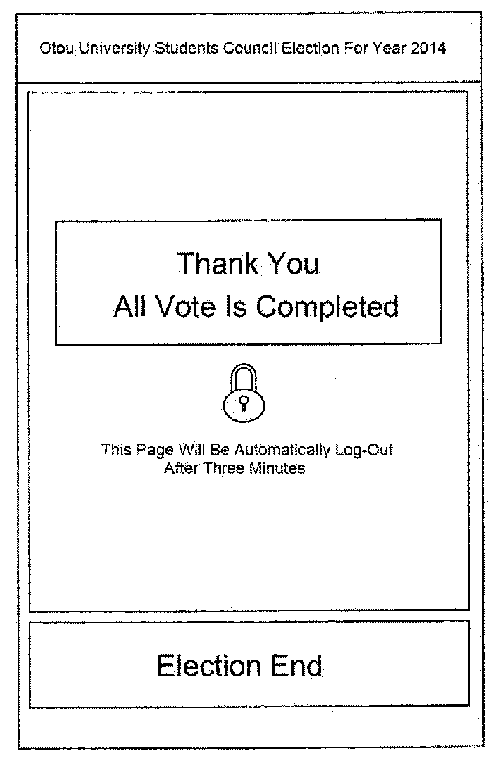

14 is a drawing showing a mobile vote observance item indication shown in FIG. 12 as an example, FIG. 15 is a drawing showing a log-in window indication shown in FIG. 12 as an example, FIG. 16 is a drawing showing an election list confirmation window indication shown in FIG. 2 as an example, FIG. 17 is a drawing showing a vote window indication shown in FIG. 12 as an example, and FIG. 18 is a drawing showing a vote completion indication shown in FIG. 12 as an example.

Referring to FIGs. 12 to 18, the steps S401 and S402 are similar to the above described steps S201 and S202 in its construction and their description is omitted.

In case where the voter performed the confirmation of the person himself with the identification card taken by himself at the vote booth designated in advance, the vote terminal 120-1 ∼ 120-M installed at the election district to make him himself to come to the vote booth and vote codes the vote certification number and prints it, or generates the vote certification number at random and codes the relevant generated vote certification number and outputs the registered card (for example, bar code) together with the access card (for example, QR code) to the voter who is confirmed of the person himself as shown in FIG. 13 (S403).

After outputting the registered card including the access code in the above described stage S403, if the voter takes a photograph of the access card included in the registered through a camera, the voter terminal 110-1 ∼ 110-N recognizes the access card included in the registered outputted by the vote terminal 120-1 ∼ 120-M and accesses the designated election site provided by the electronic vote provision server 140.

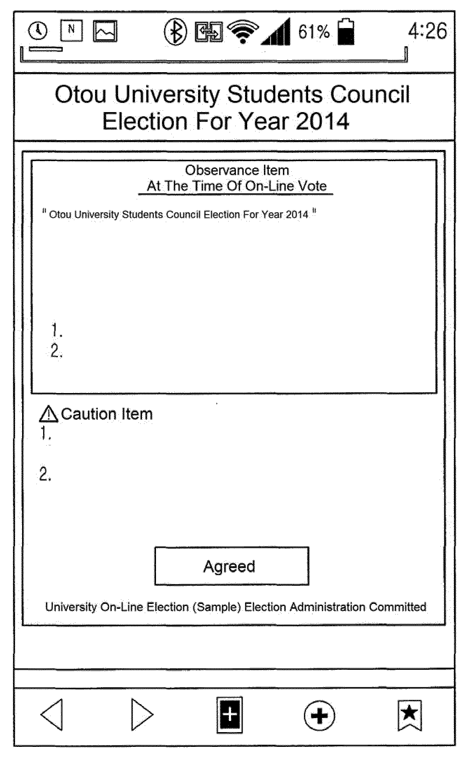

The electronic vote provision server 140 confirms voter terminal 110-1 ∼ 110-N (for example, the address, the inherent identifier and the like of the voter terminal 110-1 ∼ 110-N) accessed through the designated election site and provides the mobile vote observance item (or information on the vote procedure) to the relevant confirmed voter terminal 110-1 ∼ 110-N, then the voter terminal 110-1 ∼ 110-N receives the mobile vote observance item (or the information including the vote procedure) through the designated election site and displays it as shown in FIG. 14 (S404).

As to the mobile vote observance item displayed at the step S404 as described above, if the voter clicks the agreement about the mobile vote observance item as shown in FIG. 14 through the input means (for example, the point by the mouse or the like), the voter terminal 110-1 ∼ 110-N generates an agreement information for informing that the voter agreed on the mobile vote observance item according to the agreement input of the voter and provides to the electronic vote provision server 140.

The electronic vote provision server 140 confirms the agreement information received from the voter terminal 110-1 ∼ 110-N and provides the log-in window information to the voter terminal 110-1 ∼ 110-N, then the voter terminal 110-1 ∼ 110-N displays the log-in window information (or the click window for inputting the candidate public promise look) received from the electronic vote provision server 140 as shown in FIG. 15 (S405).

In the log-in window displayed at the step S405 as described above, if the voter inputs the log-in information (for example, the residents number, student number or the like) and the vote certification number through the input means (for example, touch panel, key pad or the like) or the voter terminal 110-1 ∼ 110-N automatically receives the vote certification number of the voter through the access code recognition, then the voter terminal 110-1 ∼ 110-N provides the relevant received log-in information and the vote certification number to the electronic vote provision server 140.

For example, the voter terminal 110-1 ∼ 110-N can provide the student number inputted by the voter and the automatically inputted vote certification number to the electronic vote provision server 140 through a certification confirmation click and in case of clicking the candidate public promise look, can receive the candidate public promise from the electronic vote provision server 140 and show it.

The electronic vote provision server 140 receives the log-in information and the vote certification number of the voter from the voter terminal 110-1 ∼ 110-N and confirms whether the relevant received log-in information has been registered in the voter information stored in the data base 150, and performs the vote certification about the voter terminal 110-1 ∼ 110-N by using the relevant confirmed voter information (S406).

After performing the vote certification at the step S406 as described above, the electronic vote provision server 140 reads from the data base 150 the election information for confirming the election list and voting and provides it to the voter terminal 110-1 ∼ 110-N, then the voter terminal 110-1 ∼ 110-N displays the election information (that is, the election list confirmation window and vote window information) received from the electronic vote provision server 140 as shown in FIGs. 16 and 17 (S407).

In the election information displayed at the step S407 as described above, if the voter selects the list for election and clicks the vote start and then selects the candidate and clicks the vote, then the voter terminal 110-1 ∼ 110-N codes the relevant inputted vote value information of the voter and provides it to the electronic vote provision server 140.

For example, the voter terminal 110-1 ∼ 110-N can make the voter to select one among the list of the medical department chairman election, the medical college chairman election, and the general student chairman election displayed through the input means and to click the vote start, then the electronic vote provision server 140 can display the candidate vote page corresponding to the selected list through the voter terminal 110-1 ∼ 110-N. At this time, the voter terminal 110-1 ∼ 110-N displays in an obscure stamp form when the voter puts a mouse at a candidate on a displayed candidate vote page and if the voter clicks while putting the mouse at the candidate, the stamp becomes clear and the selection is made. And, the voter terminal 110-1 ∼ 110-N can make the voter to click an abandonment to reflect the abandonment at the vote result and make the voter to click next button to perform the vote for other election list.

The electronic vote provision server 140 receives the vote value information from the voter terminal 110-1 ∼ 110-N and decodes it and estimates the vote information (for example, the vote rate for each election, the vote progress rate for each region, etc.) and registers it in the data base 150, and then reads from the data base 150 the vote completion information for announcing the vote completion and provides it to the voter terminal 110-1 ∼ 110-N, and then the voter terminal 110-1 ∼ 110-N displays the vote completion information received from the electronic vote provision server 140 as shown in FIG. 18 (S408).

After vote end as in the above described step S408, the step S409 is similar to the above described step S208 in its construction and its description is omitted.

During performing the above described stages S401 to S409, the mirroring backup server 160 maintains a synchronization with the electronic vote provision server 140 about the electronic vote action by performing the mirroring backup in real time bout the electronic vote action processed in the electronic vote provision server 140 as described above, and at this time, if the mirroring backup server senses a case where there is a possibility of an electronic vote error such as a case where the load on the electronic vote provision server 140 is at or above the already set load, the mirroring backup server stops the electronic vote action of the electronic vote provision server 140, and continuously provides the electronic vote action instead of that.

For example, the mirroring backup server 160 synchronizes in real time the registration processing about the election information and the voter information S401 and S402, the provision processing about the mobile vote observance item S404, the agreement information confirmation and log-in window information provision processing S405, the log-in information and vote certification number reception and vote certification processing S406, the election information provision processing S407, the vote value information decode and the vote completion information provision processing S408, and the vote information estimation processing and the vote information provision processing S409.

The embodiments of the present invention can be embodied not only through the above described devices and/or methods but also through programs for realizing the functions corresponding to the construction of the embodiments of the present invention and recording media in which the programs are recorded, and this embodiment can be easily embodied from the recording of the above described embodiments by those skilled in the art to which the present invention belongs.

Although the embodiments of the present invention have been described in detail, the scope of the right of the present invention is not limited to them, but various deformations and improvements made by those skilled in the art to which the present invention belongs using the basic concepts of the present invention defined in the accompanying claims also belong to the scope of the right of the present invention.

## Claims

1. An electronic vote system comprising:
a plurality of voter terminals which access a designated election site, receive an online vote observance item and display it, then receive an agreement information of voters and transmit it, display a log-in window information and then receive a log-in information of the voter, code it and transmit it, then display an election information after a voter certification, then receive a vote value information of the voter and code it and transmit it;
a plurality of vote terminals which code a vote certification number and print it, or generate the vote certification number at random and code it and output a registered card, receive the log-in information and the vote certification number of the voter and provide them, receive the election information and display it and then receive the vote value information and code it and provide it;
an administrator terminal which generates the election information together with a decode key or a plurality of vote count keys, transmits the decode key to e-mail or hand phone of the administrator or respectively transmits each vote count key to e-mail or hand phone of each vote counter, transmits the election information, receives a voter information and codes it and provides it, generates a final designation of a candidate information and a vote start information and transmits them;
an electronic vote provision server which registers the election information and the voter information transmitted from the administrator terminal, provides the designated election site to the voter terminal according to the vote start information transmitted from the administrator terminal, provides the online vote observance item to the voter terminal and then receives the agreement information and provides the log-in window information to the voter terminal, performs the voter certification by receiving the log-in information and decoding it and then confirming the registered voter information, provides the registered election information to the voter terminal and then receives the vote value information and decodes it and registers it, receives the log-in information and the vote certification number of the voter from the vote terminal and confirms the registered voter information and performs the vote certification, then provides the registered election information to the vote terminal and then receives the vote value information and decodes it and registers it, and totals the vote result and estimates a vote information and registers it at the time of the vote completion;
a data base which stores the voter information, the election information, the vote information which are registered at the electronic vote provision server;
a mirroring backup server which performs a mirroring backup about an electronic vote process of the electronic vote provision server and maintains a synchronization with the electronic vote provision server, and substitutes the electronic vote provision server at the time of occurrence of an electronic vote error of the electronic vote provision server; and
a network which transmits and receives data between the electronic vote provision server or the mirroring backup server and the voter terminal or the vote terminal or the administrator terminal.

2. The electronic vote system of claim 1, wherein the voter terminal recognizes an access code included in the registered card outputted from the vote terminal and accesses the designated election site, receives the mobile vote observance item through the designated election site and displays it and then provides the agreement information of the voter to the electronic vote provision server, displays the log-in window information provided by the electronic vote provision server and then receives or automatically receives the log-in information and the vote certification number of the voter and provides it to the electronic vote provision server, and displays the election information provided by the electronic vote provision server and then codes the vote value information of the voter and provides it to the electronic vote provision server.

3. The electronic vote system of claim 2, wherein the electronic vote provision server provides the designated election site to the voter terminal through a recognition of the access code of the voter terminal, provides the mobile vote observance item to the voter terminal and then confirms the agreement information and provides the log-in window information to the voter terminal, receives the log-in information and the vote certification number of the voter and confirms the voter information registered in the data base and performs the vote certification, provides the election information registered in the data base to the voter terminal and then receives the vote value information and decodes it and registers it to the data base.

4. The electronic vote system of claim 1, wherein the administrator terminal receives the decode key from the administrator after the end of the vote and confirms whether it coincides with the previously generated decode key, or receives each vote count key from each vote counter and confirms whether it coincides with each previously generated vote count key, and generates a vote count information and transmits it to the electronic vote provision server in case of coincidence.

5. The electronic vote system of claim 1, wherein the electronic vote provision server confirms a vote rate among the estimated vote information, and in case it is lower than an already set vote rate, confirms the voter who has not voted from the data base, and generates a character message and transmits it to the voter terminal corresponding to the confirmed voter.

6. An electronic vote method comprising:
a step in which an administrator terminal generates the election information together with a decode key or a plurality of vote count keys, transmits the decode key to e-mail or hand phone of an administrator or respectively transmits each vote count key to e-mail or hand phone of each vote counter, and transmits the election information to an electronic vote provision server, and the electronic vote provision server registers the election information transmitted from the administrator terminal;
a step in which the administrator terminal receives a voter information and codes it and provides it to the electronic vote provision server, and the electronic vote provision server registers the voter information provided by the administrator terminal;
a step in which the administrator terminal generates a final designation of a candidate information and a vote start information and transmits them, and the electronic vote provision server provides the designated election site to a plurality of voter terminals according to the vote start information transmitted from the administrator terminal;
a step in which the voter terminal accesses a designated election site, and the electronic vote provision server provides a online vote observance item to the voter terminal, and the voter terminal receives the online vote observance item and displays it and then receives an agreement information of the voter and transmits it to the electronic vote provision server;
a step in which the electronic vote provision server receives the agreement information and provides a log-in window information to the voter terminal, and the voter terminal displays the log-in window information and then receives a log-in information of the voter, codes it and transmits it to the electronic vote provision server;
a step in which the electronic vote provision server performs the voter certification by receiving the log-in information and decoding it and confirming the registered voter information;
a step in which the electronic vote provision server provides the registered election information to the voter terminal and the voter terminal displays an election information, then receives a vote value information of the voter and codes it and transmits it to the electronic vote provision server;
a step in which the electronic vote provision server decodes the vote value information received from the voter terminal and registers it, and then provides a vote completion information to the voter terminal, and the voter terminal displays the vote completion information;
a step in which the administrator terminal receives the decode key from the administrator after the end of the vote and confirms whether it coincides with the previously generated decode key, or receives each vote count key from each vote counter and confirms whether it coincides with each previously generated vote count key, and generates a vote count information and transmits it to the electronic vote provision server in case of coincidence; and
a step in which the electronic vote provision server provides a result look window information to the voter terminal according to the vote count information transmitted from the administrator terminal, and provides the registered vote information to the voter terminal upon receiving the result look window information from the voter terminal and displays it.

7. The electronic vote method of claim 6 further comprising:
a step in which a plurality of vote terminals code a vote certification number and print it, or generate the vote certification number at random and code it and output a registered card;
a step in which the vote terminal receives the log-in information and the vote certification number of the voter and provides them to the electronic vote provision server; and
a step in which the vote terminal receives the election information and displays it and then receives the vote value information and code it and provide it to the electronic vote provision server.

8. The electronic vote method of claim 7 further comprising:
a step in which the voter terminal recognizes an access code included in the registered card outputted from the vote terminal and accesses the designated election site;
a step in which the electronic vote provision server provides the designated election site to the voter terminal through a recognition of the access code of the voter terminal, and provides the mobile vote observance item to the voter terminal;
a step in which the voter terminal receives the mobile vote observance item through the designated election site and then provides the agreement information of the voter to the electronic vote provision server, and the electronic vote provision server confirms the agreement information and provides a log-in window information to the voter terminal;
a step in which the voter terminal displays the log-in window information provided by the electronic vote provision server and then receives or automatically receives the log-in information and the vote certification of the voter, and provides them to the electronic vote provision server;
a step in which the electronic vote provision server performs the vote certification by receiving the log-in information and the vote certification number of the voter from the voter terminal and confirming the registered voter information;
a step in which the electronic vote provision server provides the registered election information to the voter terminal and the voter terminal displays an election information provided by the electronic vote provision server, then receives a vote value information of the voter and codes it and provides it to the electronic vote provision server; and
a step in which the electronic vote provision server decodes the vote value information received from the voter terminal and registers it, and then provides a vote completion information to the voter terminal, and the voter terminal displays the vote completion information.

9. The electronic vote method of claim 6 further comprising a step in which the mirroring backup server performs a mirroring backup about the electronic vote process of the electronic vote provision server and maintains a synchronization with the electronic vote provision server, and substitutes the electronic vote provision server at the time of occurrence of the electronic vote error of the electronic vote provision server.

10. An electronic vote method comprising:
a step in which an administrator terminal generates the election information together with a decode key or a plurality of vote count keys, transmits the decode key to e-mail or hand phone of an administrator or respectively transmits each vote count key to e-mail or hand phone of each vote counter, and transmits the election information to an electronic vote provision server, and the electronic vote provision server registers the election information transmitted from the administrator terminal;
a step in which the administrator terminal receives a voter information and codes it and provides it to the electronic vote provision server, and the electronic vote provision server registers the voter information provided by the administrator terminal;
a step in which a plurality of vote terminals code a vote certification number and print it, or generate the vote certification number at random and code it and output a registered card, and then receive the log-in information and the vote certification number of the voter and provide them to the electronic vote provision server;
a step in which the electronic vote provision server performs the vote certification by receiving the log-in information and the vote certification number of the voter from the vote terminal and confirming the registered voter information;
a step in which the electronic vote provision server provides the registered election information to the vote terminal and the vote terminal receives the election information and displays it, then receives a vote value information of the voter and codes it and provides it to the electronic vote provision server;
a step in which the electronic vote provision server decodes the vote value information received from the vote terminal and registers it, and then provides a vote completion information to the vote terminal, and the vote terminal displays the vote completion information;
a step in which the administrator terminal receives the decode key from the administrator after the end of the vote and confirms whether it coincides with the previously generated decode key, or receives each vote count key from each vote counter and confirms whether it coincides with each previously generated vote count key, and generates a vote count information and transmits it to the electronic vote provision server in case of coincidence; and
a step in which the electronic vote provision server provides a result look window information to the voter terminal according to the vote count information transmitted from the administrator terminal, and provides the registered vote information to the voter terminal upon receiving the result look window information from the voter terminal and displays it.

11. An electronic vote method comprising:
a step in which an administrator terminal generates the election information together with a decode key or a plurality of vote count keys, transmits the decode key to e-mail or hand phone of an administrator or respectively transmits each vote count key to e-mail or hand phone of each vote counter, and transmits the election information to an electronic vote provision server, and the electronic vote provision server registers the election information transmitted from the administrator terminal;
a step in which the administrator terminal receives a voter information and codes it and provides it to the electronic vote provision server, and the electronic vote provision server registers the voter information provided by the administrator terminal;
a step in which a plurality of vote terminals code a vote certification number and print it, or generate the vote certification number at random and code it and output a registered card;
a step in which a plurality of voter terminals recognizes an access code included in the registered card outputted from the vote terminal and access the designated election site;
a step in which the electronic vote provision server provides the designated election site to the voter terminal through a recognition of the access code of the voter terminal, and provides the mobile vote observance item to the voter terminal;
a step in which the voter terminal receives the mobile vote observance item through the designated election site and then provides the agreement information of the voter to the electronic vote provision server, and the electronic vote provision server confirms the agreement information and provides a log-in window information to the voter terminal;
a step in which the voter terminal displays the log-in window information provided by the electronic vote provision server and then receives or automatically receives the log-in information and the vote certification of the voter, and provides them to the electronic vote provision server;
a step in which the electronic vote provision server performs the vote certification by receiving the log-in information and the vote certification number of the voter from the voter terminal and confirming the registered voter information;
a step in which the electronic vote provision server provides the registered election information to the voter terminal and the voter terminal displays an election information provided by the electronic vote provision server, then receives a vote value information of the voter and codes it and provides it to the electronic vote provision server; and
a step in which the electronic vote provision server decodes the vote value information received from the voter terminal and registers it, and then provides a vote completion information to the voter terminal, and the voter terminal displays the vote completion information;
a step in which the administrator terminal receives the decode key from the administrator after the end of the vote and confirms whether it coincides with the previously generated decode key, or receives each vote count key from each vote counter and confirms whether it coincides with each previously generated vote count key, and generates a vote count information and transmits it to the electronic vote provision server in case of coincidence; and
a step in which the electronic vote provision server provides a result look window information to the voter terminal according to the vote count information transmitted from the administrator terminal, and provides the registered vote information to the voter terminal upon receiving the result look window information from the voter terminal and displays it.
